# EUROPÄISCHE PATENTSCHRIFT

(11) **EP 3 524 461 B1**
(45) Veröffentlichungstag und Bekanntmachung des Hinweises auf die Patenterteilung: **22.09.2021**
(21) Anmeldenummer: 19151977.6
(22) Anmeldetag: 15.01.2019
(51) Int. Cl.: B60K 37/04, B60K 35/00, B60K 37/06

(54) **VANDALISMUSRESISTENTE INFORMATIONSSCHNITTSTELLENVORRICHTUNG FÜR EINE BODENBEARBEITUNGSMASCHINE**
VANDALISM-RESISTANT INFORMATION INTERFACE DEVICE FOR A SOIL WORKING MACHINE
DISPOSITIF D'INTERFACE D'INFORMATIONS RÉSISTANT AU VANDALISME POUR UNE MACHINE DE TRAITEMENT DU SOL

(30) Priorität: 08.02.2018 DE 102018202015
(43) Veröffentlichungstag der Anmeldung: 14.08.2019
(73) Patentinhaber: Wirtgen GmbH, 53578 Windhagen (DE)
(72) Erfinder: Drumm, Stephan, 53545 Ockenfels (DE); Barimani, Cyrus, 53639 Königswinter (DE)
(74) Vertreter: Ruttensperger Lachnit Trossin Gomoll

(56) Entgegenhaltungen:
- US-A- 3 583 519
- US-A- 3 913 701
- US-A- 5 165 262
- US-A1- 2005 053 447
- US-A1- 2015 321 597

## Beschreibung

Die vorliegende Erfindung betrifft eine Informationsschnittstellenvorrichtung mit einer Schnittstellenbaugruppe gemäß Anspruch 1.

Eine gattungsgemäße Informationsschnittstellenvorrichtung einer Bodenbearbeitungsmaschine, welche durch eine Schutzplatte abdeckbar und sicherbar ist, ist aus der US 3913701 bekannt.

Eine relativ zu einer zu verbergenden Bedienfläche schwenkbare und in sich faltbare Abdeckung ist aus der US 5165262 bekannt.

Eine zur Umfassung einer Lenksäule mehrteilig ausgebildete schwenkbare Abdeccklappe zur Sicherung einer Bedienfläche an einem Radlader ist aus der US 3583519 bekannt.

Informationsschnittstellenvorrichtungen der eingangs genannten Art sind an Fahrständen von Bodenbearbeitungsmaschinen bereits im Einsatz. Sie dienen vorrangig dazu, Informationen an einen Maschinenführer auszugeben, können jedoch zusätzlich oder alternativ zur Eingabe von Information durch den Maschinenführer an eine Steuervorrichtung ausgebildet sein.

Beispielsweise ist eine Informationsschnittstellenvorrichtung der eingangs genannten Art an der Straßenkaltfräse vom Typ W 150 CF der Anmelderin in Gestalt eines Monitors zur Darstellung von Kameraansichten bekannt. Dabei ist an der Bodenbearbeitungsmaschine zur Beobachtung wenigstens eines für den Maschinenführer vom Fahrstand aus schlecht oder nicht einsehbaren Bereichs eine Kamera angeordnet, welche den Bereich optisch erfasst und bildlich an dem Monitor wiedergibt. Die Funktionsfläche ist in diesem bekannten Anwendungsfall eine Bildausgabefläche des Monitors.

Ebenfalls von der W 150 CF ist als Beispiel für eine weitere Informationsschnittstellenvorrichtung ein Bediendisplay des Nivelliersystems "LEVEL PRO PLUS" bekannt. Die bei bestimmungsgemäßem Betrieb zum Maschinenführer auf dem Fahrstand hinweisende Funktionsfläche des Bediendisplays umfasst einen Anzeigebereich zur Anzeige von Nivellierdaten, sowie Bedienelemente zur Eingabe von Daten bzw. Information.

Immer häufiger treten bei Bodenbearbeitungsmaschinen auf Baustellen in Phasen eines unbeobachteten Nichtgebrauchs Probleme mit Vandalismus auf. Unbefugte betreten dabei das Baustellengelände und machen sich an den dort abgestellten Maschinen zu schaffen. Dabei versuchen manche auch, in den Fahrstand einer Bodenbearbeitungsmaschine zu gelangen. Diese Personen sind in der Regel nicht von technischer Neugier, sondern von Zerstörungswut getrieben, sodass großes Interesse besteht, leicht zerstörbare, empfindliche Baugruppen, wie etwa die oben genannte Informationsschnittstellenvorrichtung, möglichst vor einem Angriff durch Vandalen zu schützen. Gerade technisch sensible Vorrichtungen, wie Monitore und Anzeigevorrichtungen, welche häufig aus ergonomischen Gründen zur besseren Erfassung ihrer Informationsausgabe durch den Maschinenführer bezüglich anderer Einrichtungen im Fahrstand vorstehen, sind bevorzugtes Angriffsziel von Vandalen.

Daher ist es Aufgabe der vorliegenden Erfindung, die Vandalismussicherheit der eingangs genannten Informationsschnittstellenvorrichtung zu erhöhen.

Diese Aufgabe wird erfindungsgemäß durch eine Informationsschnittstelle mit allen Merkmalen des Anspruchs 1 gelöst. Dabei weist zunächst die Informationsschnittstellenvorrichtung eine gesondert von der Schnittstellenbaugruppe ausgebildete Schutzplatte zur Abdeckung der Funktionsfläche auf, wobei die Schutzplatte einen Verankerungsabschnitt aufweist, mit welchem die Schutzplatte an einem Verankerungsgegenabschnitt der Schnittstellenbaugruppe verankerbar und damit der Verankerungsabschnitt gegen ein Entfernen von der Funktionsfläche sicherbar ist, und wobei die Schutzplatte einen vom Verankerungsabschnitt verschiedenen Verrastungsabschnitt aufweist, mit welchem die Schutzplatte an einem Verrastungsgegenabschnitt der Schnittstellenbaugruppe lösbar verrastbar und damit der Verrastungsabschnitt gegen ein Entfernen von der Funktionsfläche sicherbar ist.

Durch diese Ausbildung ist die Funktionsfläche, unabhängig davon, welche Funktionselemente oder/und Funktionsbereiche zum Informationsaustausch mit dem Maschinenführer sie aufweist, durch die Schutzplatte abdeckbar. Dadurch sind sensible Abschnitte der Funktionsfläche, die aufgrund ihrer Bauweise bereits mit geringem Kraftaufwand bzw. geringer krimineller Energie zerstörbar sind, für den unbefugt sich der Informationsschnittstellenvorrichtung nähernden Vandalen nicht ohne Weiteres erreichbar.

Mit dem Verankerungsabschnitt und dem Verrastungsabschnitt ist die Schutzplatte an zwei gesondert und mit Abstand voneinander ausgebildeten Orten fest mit der Schnittstellenbaugruppe verbindbar, sodass ein Vandale die Schutzplatte nicht ohne weiteres von der Schnittstellenbaugruppe entfernen kann, um die durch die Schutzplatte verborgenen und geschützten Funktionsbereiche der Funktionsfläche erreichen zu können. Der Verankerungsabschnitt stellt dabei bevorzugt von den genannten Schutzplattenabschnitten die dauerhaftere Verbindung mit der Schnittstellenbaugruppe her. Der Verrastungsabschnitt sorgt für die Lösbarkeit der Schutzplatte aus ihrer die Funktionsfläche abdeckenden Abdeckposition. Dabei bedeutet der Umstand, dass die Schutzplatte am Verrastungsabschnitt von der Schnittstellenbaugruppe lösbar ist, nicht notwendigerweise, dass die Schutzplatte von jedermann lösbar ist.

Durch den Verankerungsabschnitt und den Verrastungsabschnitt sind zwei Abschnitte bereitgestellt, von welchen bevorzugt jeder durch einen Formschlusseingriff mit der Schnittstellenbaugruppe an der Schnittstellenbaugruppe sicherbar sind. Folglich ist die Schutzplatte insgesamt mittels der beiden Abschnitte mit hoher Widerstandskraft gegen äußere Angriffe an der Schnittstellenbaugruppe, die Funktionsfläche abdeckend, festlegbar.

Jeder Abschnitt aus Verankerungsgegenabschnitt und Verrastungsgegenabschnitt der Schnittstellenbaugruppe kann vollständig am Gehäuse oder vollständig an der Funktionsfläche oder sowohl am Gehäuse als auch an der Funktionsfläche ausgebildet sein. Da das Gehäuse als bevorzugt rein oder wenigstens überwiegend mechanisch-passives Bauteil wesentlich robuster ausgebildet werden kann als die durch Anordnung von elektrischen oder/und elektronischen Bauteilen sensible Funktionsfläche, sind sowohl der Verankerungsgegenabschnitt als auch der Verrastungsgegenabschnitt bevorzugt wenigstens überwiegend, vorzugsweise vollständig, am Gehäuse ausgebildet.

Dann, wenn der Verankerungsgegenabschnitt oder/und der Verrastungsgegenabschnitt auch durch einen Bereich der Funktionsfläche gebildet ist bzw. sind, ist bevorzugt der zum jeweiligen Abschnitt beitragende Bereich der Funktionsfläche durch die Schutzplatte in der Abdeckposition abdeckbar.

Wie bereits an den eingangs beschriebenen Beispielen des Standes der Technik aufgezeigt wurde, kann die Funktionsfläche, unter anderem, eine Bildausgabefläche einer Anzeigevorrichtung sein oder umfassen oder/und eine Tonausgabefläche, etwa eine Lautsprecherabdeckung, sein oder umfassen oder/und wenigstens ein Bedienelement, wie etwa Taste, Tastenfläche, Touchscreen, Drehregler und dergleichen, zur Eingabe von Daten und Information sein oder umfassen.

Bevorzugt ist die Funktionsfläche im Wesentlichen eben oder umfasst ebene Flächenbereiche, welche orthogonal zu ihrer ebenen Erstreckungsfläche mit Abstand voneinander angeordnet sind. Auch eine geringfügig gekrümmte Funktionsfläche, wie es beispielsweise von Bildschirmen bekannt ist, soll nicht ausgeschlossen sein.

Zur möglichst sicheren und dauerhaften Anordnung der Schutzplatte in der Abdeckposition an der Schnittstellenbaugruppe sind bevorzugt der Verankerungsabschnitt und der Verrastungsabschnitt an einander endgegengesetzten Enden, insbesondere Längsenden, der Schutzplatte vorgesehen. Gemäß einer weiter bevorzugten Ausführungsform kann die Schutzplatte eine rechteckige Grundgestalt aufweisen, d. h. sie weist vier Randbereiche auf, von welchen je zwei nicht-benachbarte Randbereiche zueinander parallel sind und von welchen je zwei benachbarte Randbereiche zueinander im Wesentlichen orthogonal orientiert sind. Die Ecken, an welchen zwei Randbereiche aufeinandertreffen, können abgerundet sein, um eine mögliche Verletzungsgefahr beim Hantieren mit der Schutzplatte zu verringern.

Ebenso wie die Funktionsfläche kann die Schutzplatte im Wesentlichen eben ausgebildet sein. Die Schutzplatte weist eine Funktionsflächenseite auf, welche dann, wenn die Schutzplatte in ihrer Abdeckposition die Funktionsfläche abdeckt, zur Funktionsfläche hinweist und dieser gegenüberliegt. Mit ihrer der Funktionsflächenseite entgegengesetzten Sichtseite weist die Schutzplatte in der Abdeckposition von der Funktionsfläche weg. In der Regel ist die Sichtseite die zugängliche Seite der an der Schnittstellenbaugruppe angeordneten Schutzplatte. Die Schutzplatte kann zwei identisch gestaltete Seiten aufweisen, von welchen jede- je nach Orientierung der Schutzplatte in der Abdeckposition - Funktionsflächenseite oder Sichtseite sein kann.

Bevorzugt ist die Schutzplatte auf der Funktionsflächenseite eben oder/und komplementär zur Topologie der Funktionsfläche ausgestaltet, sodass die Schutzplatte mit möglichst geringem Abstand zur Funktionsfläche, bevorzugt an dieser wenigstens bereichsweise anliegend an der Schnittstellenbaugruppe angeordnet werden kann. "Komplementär" bedeutet dabei, dass die Schutzplatte dort, wo die Funktionsfläche Erhebungen aufweist, eine die Erhebung aufnehmende Vertiefung aufweist oder/und dass bei an der Schnittstellenbaugruppe zur Abdeckung der Funktionsfläche angeordneter Schutzplatte ein Spalt zwischen der Schutzplatte und der Funktionsfläche unabhängig vom Ort der Betrachtung einem wesentlichen konstantes Spaltmaß aufweist, welches auch Null sein kann.

Die Sichtseite der Schutzplatte kann zur Erhöhung der Biegesteifigkeit der Schutzplatte um eine zur Außenfläche der Sichtseite parallele Biegeachse wenigstens eine Versteifungsformation aufweisen, wie etwa Vorsprünge oder/und Rippen, die von einem Basisbereich vorsteht. Um einen Werkzeugangriff an einer solchen Versteifungsformation zu erschweren, ist die Versteifungsformation bevorzugt über eine Fase mit dem an sie anschließenden Basisbereich verbunden. Die Fase, die sich vorzugsweise vom Basisbereich über die gesamte Höhe der Versteifungsformation erstreckt und somit die gesamte Flankenfläche der Versteifungsformation bildet, schließt bevorzugt mit der an sie anschließenden Außenfläche des Basisbereichs einen Winkel von 130° oder mehr ein.

Die Funktionsfläche weist eine im bestimmungsgemäßen Betrieb vom Gehäuse weg weisende Ausgabeseite und eine dieser entgegengesetzte, zum Gehäuse hinweisende Technikseite auf. Zwischen der Technikseite und dem Gehäuse können elektrische und elektronische Schaltkreise und Bauteile aufgenommen sein, welche zum Betrieb der Funktionsfläche notwendig ist. Bevorzugt umgibt das Gehäuse die Technikseite der Funktionsfläche schalen- oder haubenartig.

Die Ausgabeseite ist die vom Maschinenführer im Betrieb wahrnehmbare und für diesen zugängliche Seite der Funktionsfläche. Zur erleichterten Anbringung der Schutzplatte an der Schnittstellenbaugruppe und insbesondere am Gehäuse kann vorgesehen sein, dass das Gehäuse über die Ausgabeseite vorsteht. Der über die Ausgabeseite hinaus vorstehende Gehäuseteil kann dann den Verankerungsgegenabschnitt oder/und den Verrastungsgegenabschnitt aufweisen.

Zur Herstellung einer besonders sicheren und dauerhaften Formschlussverbindung zwischen dem Verankerungsabschnitt und dem Verankerungsgegenabschnitt weist gemäß einer bevorzugten Weiterbildung der vorliegenden Erfindung wenigstens ein Abschnitt aus Verankerungsabschnitt und Verankerungsgegenabschnitt einen Vorsprung oder/und eine Nut auf. Ebenso kann - muss jedoch nicht - der jeweils andere Abschnitt aus Verankerungsabschnitt und Verankerungsgegenabschnitt eine Ausnehmung aufweisen, in welche ein Vorsprung des einen Abschnitts eingreifen kann.

Ein besonders vorteilhafter formschlüssiger Verankerungseingriff zwischen Verankerungsabschnitt und Verankerungsgegenabschnitt ist dann erzielbar, wenn der Verankerungsgegenabschnitt einen Vorsprung und eine Nut aufweist. Somit sind der Vorsprung und die Nut an der Schnittstellenbaugruppe ausgebildet. Wie bereits oben begründet wurde, ist der Vorsprung bevorzugt am Gehäuse ausgebildet. Der Vorsprung erstreckt sich dabei vorzugsweise parallel zur Funktionsfläche, sodass der Vorsprung gemeinsam mit einem Abschnitt des Gehäuses, dann bevorzugt einstückig, oder/und mit einem Abschnitt der Funktionsfläche die Nut bilden kann. In diese Nut kann der Verankerungsabschnitt der Schutzplatte zur formschlüssigen Verankerung der Schutzplatte an der Schnittstellenbaugruppe einführbar sein. Somit kann die Schutzplatte stark an die Funktionsfläche angenähert werden. Da die Nut sogar durch die Funktionsfläche begrenzt sein kann, kann die Schutzplatte bis zum berührenden Kontakt an die Funktionsfläche angenähert werden. Besonders bevorzugt ist der Verankerungsabschnitt einfach, aber wirkungsvoll, durch einen Randabschnitt der Schutzplatte gebildet. Der den Verankerungsabschnitt bildende Randabschnitt muss nicht eigens als solcher mit einer oder mehreren Verankerungsformationen versehen sein, sondern kann ein ebener, geradlinig berandeter Randabschnitt sein. Er kann zum Formschlusseingriff mit einem Vorsprung des Verankerungsgegenabschnitts, insbesondere komplementär zum Vorsprung, eingesenkt sein.

Neben dem durch den Verankerungsabschnitt und den Verankerungsgegenabschnitt realisierbaren Verankerungseingriff ist der lösbare Verrastungseingriff zwischen dem Verrastungsabschnitt und dem Verrastungsgegenabschnitt der zweite gemäß der vorliegenden Erfindung die Schutzplatte in der Abdeckposition an der Schnittstellenbaugruppe sichernde Eingriff. Nachfolgend soll daher der Verrastungseingriff diskutiert werden. Dabei sei ausdrücklich darauf hingewiesen, dass der Verrastungseingriff unabhängig vom Verankerungseingriff ausgestaltet sein kann, d. h. der Verrastungseingriff kann wie nachfolgend beschrieben gemäß einer bevorzugten Weiterbildung ausgestaltet sein, ohne dass der Verankerungseingriff wie vorstehend beschrieben ausgestaltet sein muss.

Gemäß der vorliegenden Erfindung weist der Verrastungsgegenabschnitt eine zwischen einer Verrastungsstellung und einer Lösestellung verstellbare Rastformation auf. Hierdurch kann der Verrastungsabschnitt nicht nur sicher am Verrastungsgegenabschnitt festgelegt werden, sondern auch schnell vom Verrastungsgegenabschnitt gelöst werden. Folglich kann eine Betriebsbereitschaft der Informationsschnittstellenvorrichtung ausgehend von einer durch die Schutzvorrichtung abgedeckten Funktionsfläche rasch hergestellt werden.

Die Rastformation ist in der Verrastungsstellung dazu angeordnet - bei am Verankerungsgegenabschnitt verankertem Verankerungsabschnitt - einen ein Entfernen des Verrastungsabschnitts von der Funktionsfläche verhindernden Formschlusseingriff mit dem Verrastungsabschnitt herzustellen, während dann, wenn sich - wiederum bei am Verankerungsgegenabschnitt verankertem Verankerungsabschnitt - die Rastformation in der Lösestellung befindet, der Verrastungsabschnitt von der Funktionsfläche entfernbar ist. Somit kann erreicht werden, dass der Verankerungsabschnitt nur dann aus einem Verankerungseingriff mit dem Verankerungsgegenabschnitt entfernt werden kann, wenn sich der Verrastungsabschnitt nicht im Verrastungseingriff mit dem Verrastungsgegenabschnitt befindet.

Bevorzugt ist die Rastformation am Gehäuse ausgebildet und somit Teil des Verrastungsgegenabschnitts. Der Verrastungsabschnitt der Schutzplatte kann dann, wie auch der Verankerungsabschnitt, ohne besondere Verrastungformationen einfach aber wirkungsvoll durch einen Randabschnitt der Schutzplatte gebildet sein. Dieser kann wiederrum eben und geradlinig berandet sein und besonders bevorzugt parallel zu dem den Verankerungsabschnitt bildenden Randabschnitt orientiert sein. Zur erhöhten Schutzwirkung ist der den Verrastungsabschnitt bildende Randabschnitt, dann, wenn sich die Schutzplatte in der Abdeckposition und die Rastformation in der Verrastungsstellung befindet, über seine gesamte Länge von der Rastformation überdeckt.

Bevorzugt weist auch die Rastformation dann, wenn sie am Gehäuse ausgebildet ist, einen Vorsprung auf, welcher sich in der Verrastungsstellung parallel zur Funktionsfläche erstreckt und gemeinsam mit dem Gehäuse oder/und mit der Funktionsfläche eine Nut bildet. Im Gegensatz zum Vorsprung des Verankerungsgegenabschnitts ist der Vorsprung der Rastformation jedoch relativ zur Funktionsfläche und relativ zum übrigen Gehäuse beweglich. Die Nuttiefenrichtungen der durch den Verankerungsgegenabschnitt einerseits und den Verrastungsgegenabschnitt andererseits jeweils gebildeten Nuten sind vorzugsweise einander entgegengesetzt. Ihre jeweiligen Nutgründe sind vorzugsweise parallel zueinander und weisen zum jeweils anderen Nutgrund hin. Dann, wenn der Nutgrund einer Nut des Verrastungsgegenabschnitts gemeinsam mit der Rastformation beweglich ist, gilt das Gesagte dann, wenn sich die Rastformation in der Verrastungsstellung befindet.

Um zu verhindern, dass Unbefugte einen zwischen dem Verrastungsabschnitt und dem Verrastungsgegenabschnitt hergestellten Verrastungseingriff lösen, kann vorgesehen sein, dass die Rastformation zur Hemmung einer Verstellbewegung durch eine an der Schnittstellenbaugruppe oder/und an der Schutzplatte vorgesehene Sperrvorrichtung sperrbar ist.

Grundsätzlich kann die Sperrvorrichtung ein Schloss umfassen, welches einen beweglichen Riegel aufweist, der unter Verwendung eines dem Schloss zugeordneten Schließgeheimnisses, etwa in Gestalt einer mechanischen Schließkontur eines Schlüssels oder in Gestalt eines Datencodes eines Datenträgers, wie etwa einer Magnetkarte, die Rastformation wahlweise zur Verstellbewegung freigibt oder hemmt. Dabei ist das ohne Energieversorgung auskommende körperliche Schließgeheimnis eines Schlüssels bevorzugt.

Häufig sind jedoch keine komplexen Schließgeheimnisse erforderlich, etwa weil sich die Informationsschnittstellenvorrichtung bereits in einem eigens und gesondert gesicherten Fahrstand befindet. Eine ausreichende Sicherung eines Verrastungseingriffs gegen unbefugtes Lösen desselben kann dann dadurch realisiert sein, dass eine die Rastformation relativ zu sich verstellbar tragende Tragstruktur aus Schnittstellenbaugruppe oder/und Schutzplatte als Teil der Sperrvorrichtung einen Sperrkörper aufweist, welcher in der Tragstruktur verlagerbar aufgenommen ist zwischen einer Sperrstellung, in der er eine Verstellbewegung der Rastformation hemmt, und einer Freigabestellung, in der er eine Verstellbewegung der Rastformation zulässt. Bevorzugt weist die Rastformation oder/und ein die Rastformation, bevorzugt einstückig, aufweisendes Rastbauteil als einen weiteren Teil der Sperrvorrichtung eine gemeinsam mit der Rastformation bewegliche Sperrausnehmung auf, in welche der Sperrkörper in der Sperrstellung, die Verstellbewegung hemmend, einragt. Der Sperrkörper kann somit in seiner Sperrstellung eine körperliche Barriere für eine Verstellbewegung der Rastformation bilden. In der Freigabestellung ragt der Sperrkörper bevorzugt nicht in die Sperrausnehmung ein, so dass dann eine Verstellbewegung durch den Sperrkörper nicht behindert ist.

Wegen der erzielbaren höheren Robustheit ist die Tragstruktur bevorzugt durch die Schnittstellenbaugruppe gebildet, besonders bevorzugt durch einen relativ zur Funktionsfläche unbeweglichen Gehäuseabschnitt.

Bevorzugt ist der Sperrkörper in der Verrastungsstellung der Rastformation von außen nicht erkennbar, besonders bevorzugt auch in der Lösestellung der Rastformation nicht. Zur Erschwerung eines Entsperrens der Rastformation kann der Sperrkörper nur durch einen Entriegelungskörper von der Sperrstellung in die Freigabestellung verlagerbar sein. Hierzu kann vorgesehen sein, dass die Sperrausnehmung eine Sperrkörper-Öffnung aufweist, durch welche hindurch der Sperrkörper in die Sperrausnehmung hinein eintritt und aus ihr austritt. Ebenso kann die Sperrausnehmung eine von der Sperrkörper-Öffnung verschiedene Entriegelungsöffnung aufweisen, durch welche hindurch der Entriegelungskörper zur Verdrängung des Sperrkörpers aus der Sperrausnehmung in selbige einführbar ist. Somit sind bevorzugt der Sperrkörper und der Entriegelungskörper in unterschiedlichen, vorzugsweise in entgegengesetzten Richtungen in die Sperrausnehmung einführbar.

Zur Verdrängung des Sperrkörpers aus der Sperrstellung kann die Rastformation oder/und ein gemeinsam mit der Rastformation verstellbares Rastbauteil einen Entriegelungskanal aufweisen, welcher einenends an der Entriegelungsöffnung in die Sperrausnehmung mündet und welcher anderenends an einer Außenfläche der Informationsschnittstellenvorrichtung in eine Einführöffnung mündet. Durch diesen Entriegelungskanal kann der Entriegelungskörper von außen in die Sperrausnehmung einführbar sein. Bevorzugt ist der Entriegelungskörper nur durch diesen Entriegelungskanal in die Sperrausnehmung einführbar.

Zur möglichst selbsttätigen Sicherung der Schutzplatte in der Abdeckposition an der Schnittstellenbaugruppe und zur Sperrung der Rastformation ohne weitere Handlungen durch eine Bedienperson ist bevorzugt zum einen die Rastformation in die Verrastungsstellung vorgespannt oder/und ist zum anderen der Sperrkörper in die Sperrstellung vorgespannt.

Um sicherstellen zu können, dass der Sperrkörper durch den Entriegelungskörper aus der Sperrstellung definiert verdrängbar ist, ist der Sperrkörper gemäß einer bevorzugten Weiterbildung in der Tragstruktur nur längs einer vorbestimmten linienförmigen, insbesondere geradlinigen Bahnkurve verlagerbar in einer Aufnahmeausnehmung aufgenommen. Der Sperrkörper ist daher, bevorzugt nur, translatorisch bewegbar. Um den Sperrkörper mit möglichst geringem Kraftaufwand aus der Sperrstellung in seine Freigabestellung verdrängen zu können, fluchten bevorzugt dann, wenn sich der Sperrkörper in der Sperrstellung befindet, der Entriegelungskanal und die Aufnahmeausnehmung miteinander.

Durch das Vorsehen der Aufnahmeausnehmung, in welcher der Sperrkörper - je nach eingenommener Stellung - unterschiedlich tief einragend aufgenommen sein kann, kann die Länge des Entriegelungskörper als Schließgeheimnis mit niedriger Sicherheitsstufe dienen. Bei zu kurzem Entriegelungskörper verdrängt dieser selbst bei maximaler Einführung in den Entriegelungskanal den Sperrkörper nicht vollständig aus der Sperrausnehmung, sodass es bei der Sperrwirkung bleibt. Bei zu langem Entriegelungskörper verdrängt dieser zwar den Sperrkörper aus der Sperrausnehmung, dringt jedoch in die Aufnahmeausnehmung ein und wirkt dann selbst als ein eine Verstellung der Rastformation hemmender Sperrkörper. Aus diesem Grunde ist es auch bevorzugt, dass die Aufnahmeausnehmung längs der Verlagerungsbewegung des Sperrkörpers größer ausgebildet ist als die Abmessung des Sperrkörpers in dieser Richtung. Bevorzugt ist die Aufnahmeausnehmung um mehr als das 1,2-Fache, stärker bevorzugt um mehr als das 1,4-Fache längs der Verlagerungsbewegungsrichtung des Sperrkörpers länger ausgebildet als der Sperrkörper selbst, sodass dieser tief in die Aufnahmeausnehmung zurückgedrängt werden kann.

Die Rastformation ist zur Verminderung des zu ihrer Verstellbewegung notwendigen Bewegungsraums bevorzugt rotatorisch zwischen der Verrastungsstellung und der Lösestellung verlagerbar.

Um einen möglichst kurzen Übergangsbereich zwischen Hemmung der Verstellbewegung der Rastformation durch den Sperrkörper einerseits und durch den Entriegelungskörper andererseits bereitzustellen, ist bevorzugt dann, wenn sich der Sperrkörper in der Sperrstellung befindet, die Sperrkörper-Öffnung von einer ihr nächstgelegenen Austrittsöffnung der Aufnahmeausnehmung mit einem Abstand von nicht mehr als 1 mm, vorzugsweise von nicht mehr als 0,5 mm, besonders bevorzugt von nicht mehr als 0,2 mm entfernt gelegen.

Da die mit vorliegender Anmeldung vorgestellte Informationsschnittstellenvorrichtung besonders zur Verwendung an einer Bodenbearbeitungsmaschine geeignet ist, betrifft die vorliegende Erfindung auch einen Fahrstand einer Bodenbearbeitungsmaschine mit einer wie oben beschrieben ausgestalteten Informationsschnittstellenvorrichtung. Der Entriegelungskörper ist dann bevorzugt ein einen Zugang zum Fahrstand wahlweise schließender und gestattender Schlüssel. Bevorzugt ist der Entriegelungskörper der Betriebsschlüssel der den Fahrstand aufweisenden Bodenbearbeitungsmaschine, welcher ohnehin vom Maschinenführer mitgeführt werden muss und ohne den die Bodenbearbeitungsmaschine nicht in Betrieb gesetzt werden kann. Somit ist sichergestellt, dass die Informationsschnittstellenvorrichtung immer dann ausgehend von einem Zustand mit erhöhtem Vandalismusschutz betriebsbereit gemacht werden kann, wenn die Bodenbearbeitungsmaschine in Betrieb genommen werden soll.

Daher betrifft die vorliegende Erfindung auch eine Bodenbearbeitungsmaschine mit einer wie oben beschrieben ausgestalteten Informationsschnittstellenvorrichtung, insbesondere an deren Fahrstand oder/und an einem Außenbedienpult, welches am Maschinenkörper der Bodenbearbeitungsmaschine angeordnet ist und eine Steuerung der Bodenbearbeitungsmaschine von außerhalb des Fahrstands gestattet, etwa von einer neben der Bodenbearbeitungsmaschine stehenden Bedienperson.

Die vorliegende Erfindung wird nachfolgend anhand der beiliegenden Zeichnungen näher erläutert. Es stellt dar:
- Figur 1: eine grobschematische Seitenansicht einer Bodenbearbeitungsmaschine gemäß einer Ausführungsform der vorliegenden Erfindung, mit einer erfindungsgemäßen Informationsschnittstellenvorrichtung
- Figur 2: eine schematische perspektivische Ansicht der in Figur 1 gezeigten erfindungsgemäßen Informationsschnittstellenvorrichtung mit einer Schutzplatte in der Abdeckposition,
- Figur 3: eine schematische perspektivische Ansicht der erfindungsgemäßen Informationsschnittstellenvorrichtung von Figur 2 in betriebsbereitem Zustand ohne Schutzplatte, mit zugänglicher Funktionsfläche,
- Figur 4: eine schematische Explosionsansicht der erfindungsgemäßen Informationsschnittstellenvorrichtung von Figur 2,
- Figur 5: eine schematische Längsschnittansicht der erfindungsgemäßen Informationsschnittstellenvorrichtung von Figur 2.

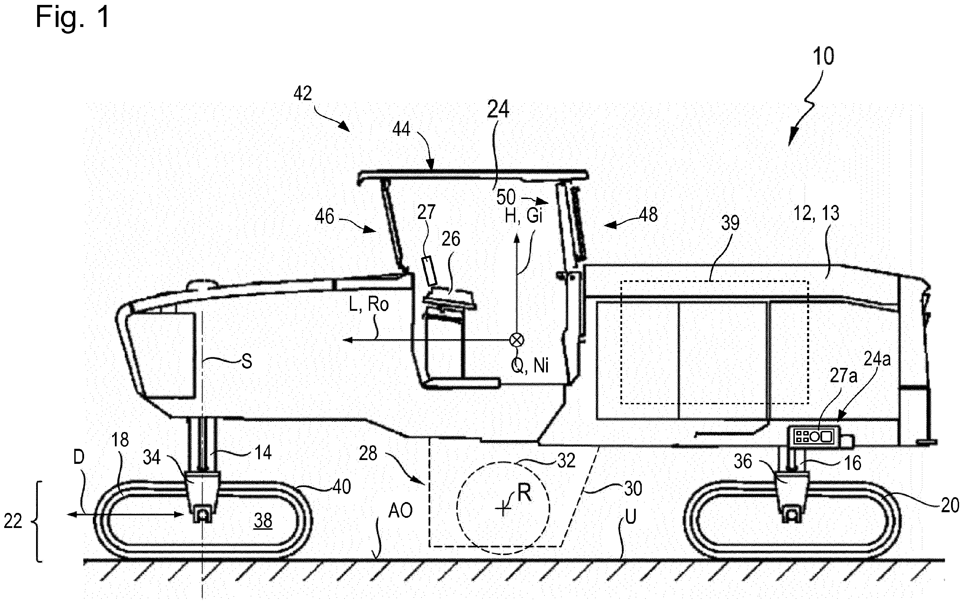

In Figur 1 ist eine erfindungsgemäße Ausführungsform einer Bodenbearbeitungsmaschine in Gestalt einer Boden- oder Straßen-Großfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Schaltpult 26 die Maschine 10 steuern kann. Das Schaltpult 26 weist eine Informationsschnittstellenvorrichtung 27 in Gestalt eines Bediendisplays auf. Eine weitere Informationsschnittstellenvorrichtung 27a weist die Bodenbearbeitungsmaschine 10 an einem Außenbedienpult 24a auf, welches seitlich für eine auf dem Untergrund U stehende Bedienperson zugänglich an der Bodenbearbeitungsmaschine 10 angeordnet ist und welches ebenfalls eine Steuerung der Bodenbearbeitungsmaschine 10 ermöglicht.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung. Alternativ oder zusätzlich kann die Fräswalze 32 relativ zum Maschinenrahmen 12 höhenverstellbar an diesem aufgenommen sein.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Der Fahrstand 24 ist von einem Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist. Das Schutzdach 44 ist mittels einer Bewegungsführung 50 heb- und senkbar am Maschinenrahmen 12 angeordnet. In Figur 1 ist das Schutzdach 44 in seiner angehobenen Betriebsstellung gezeigt, in welcher die Maschine 10 für einen Bearbeitungsbetrieb bereit ist.

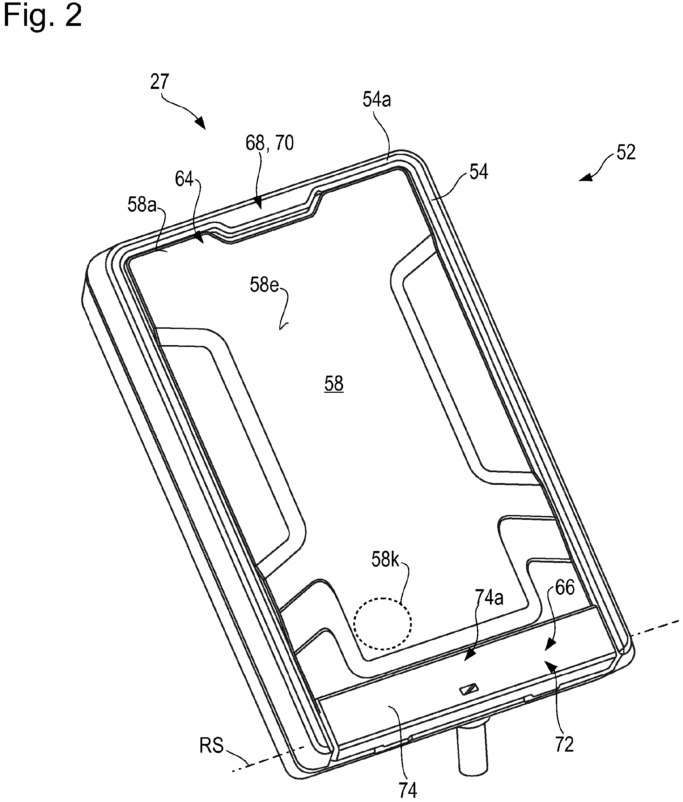

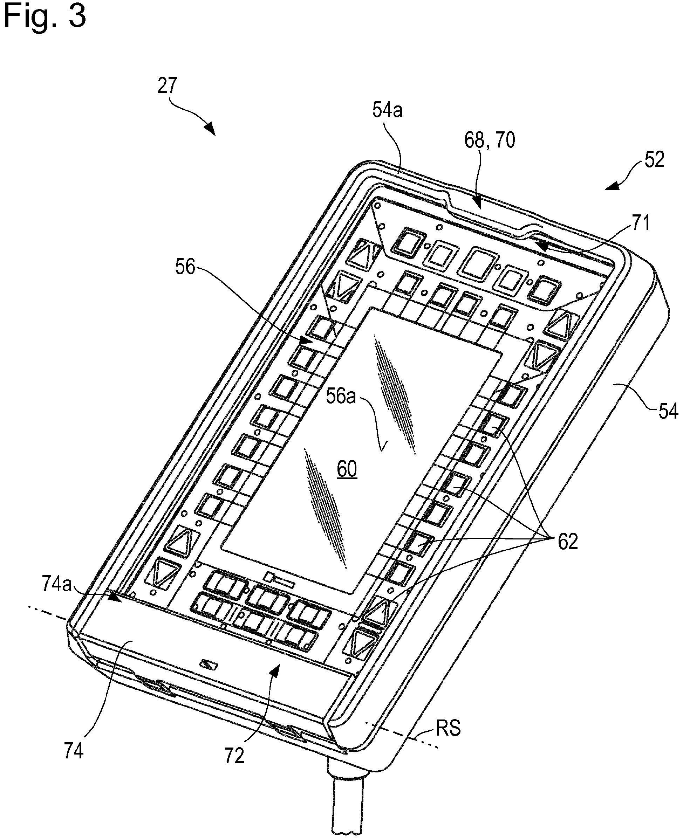

In Figur 2 ist die Informationsschnittstellenvorrichtung 27 der Bodenbearbeitungsmaschine 10 von Figur 1 grobschematisch in perspektivischer Ansicht dargestellt. Sie umfasst eine Schnittstellenbaugruppe 52, welche ein Gehäuse 54 und eine zur Eingabe oder/und Ausgabe von Information ausgebildete Funktionsfläche 56 aufweist (siehe auch Figur 3).

In der Darstellung von Figur 2 befindet sich die Informationsschnittstellenvorrichtung 27 in einem Zustand erhöhten Vandalismusschutzes, in welchem eine Schutzplatte 58 in einer die Funktionsfläche abdeckenden Abdeckposition an der Schnittstellenbaugruppe 52 angeordnet und gegen ein Entfernen von der Funktionsfläche 56 gesichert ist.

Die Funktionsfläche 56 weist eine bei bestimmungsgemäßem Gebrauch zum Maschinenführer hinweisende Ausgabeseite 56a auf und weist eine dieser entgegengesetzte Technikseite 56b auf. Die Technikseite 56b ist im vorliegenden Ausführungsbeispiel vollständig vom Gehäuse 54 umschlossen. Zwischen dem Gehäuse 54 und der Technikseite 56b der Funktionsfläche 56 befinden sich beispielsweise elektrische Leitungen sowie elektrische und elektronische Bauteile, welche den Betrieb der Funktionsfläche zur Eingabe und Ausgabe von Information sicherstellen.

Die Funktionsfläche 56 ist vorliegend als flächiges Bauteil zu verstehen.

Die Funktionsfläche 56 weist eine Bildausgabefläche 60 sowie eine Mehrzahl von Bedienelementen 62 auf. Die Bildausgabefläche 60 dient überwiegend der Ausgabe von Information an den Maschinenführer. Die Bedienelemente 62 dienen überwiegend der Eingabe von Information durch den Maschinenführer an eine Steuereinrichtung. Der Übersichtlichkeit halber sind nur einige Bedienelemente 62 mit Bezugszeichen versehen.

Die mit elektrischen und elektronischen Bauteilen kooperierende Funktionsfläche 56 ist folglich ein mechanisch hochsensibles Bauteil, welches bereits bei geringer bis mittlerer äußerer Krafteinwirkung zerstört werden kann.

Um die Funktionsfläche 56 in Zeiten, in welchen die Bodenbearbeitungsmaschine 10 nicht in Betrieb ist, vor unberechtigtem Zugriff und unerwünschter Gewalteinwirkung zu schützen, ist, wie in Figur 2 dargestellt ist, die Schutzplatte 58 an der Schnittstellenbaugruppe 52 anordenbar.

Hierzu weist die beispielhaft rechteckig ausgestaltete Schutzplatte 58 an ihrer einen Schmalseite, also an ihrem einen Längsende, einen Verankerungsabschnitt 64 auf, welcher durch einen Randabschnitt 58a der Schutzplatte 58 gebildet ist.

An ihrem entgegengesetzten Schmalabschnitt bzw. Längsende weist die Schutzplatte 58 einen Verrastungsabschnitt 66 auf, welcher durch den entgegengesetzten Randabschnitt 58b gebildet ist.

Das Gehäuse 54 steht mit einem Abschnitt 54a über die Ausgabeseite 56a hinaus in Richtung von der Technikseite 56b weg, also zu dem die Funktionsfläche 56 betrachtenden Maschinenführer hin, vor. Das Gehäuse 54 weist in diesem Abschnitt 54a einen zur Verankerung der Schutzplatte 58 an der Schnittstellenbaugruppe 52 mit dem Verankerungsabschnitt 64 zusammenwirkenden Verankerungsgegenabschnitt 68 auf. Der Verankerungsgegenabschnitt 68 umfasst einen Vorsprung 70, welcher bevorzugt einstückig mit dem Gehäuse 54 ausgebildet ist und von dem über die Ausgabeseite 56a hinaus erstreckenden Abschnitt 54a des Gehäuses 54 etwa parallel zur Haupterstreckungsfläche der Funktionsfläche 56 vom übrigen Gehäuse 54 vorsteht.

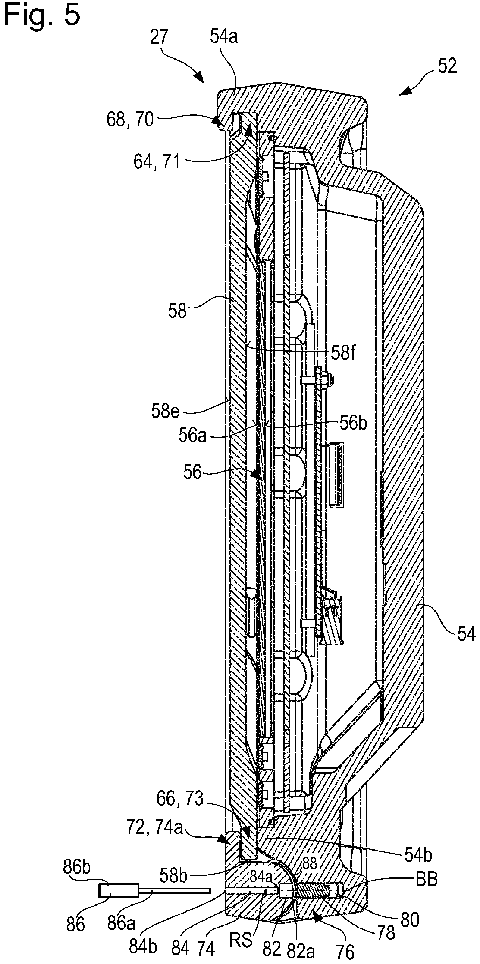

Somit ist zwischen dem Vorsprung 70 des Verankerungsgegenabschnitts 68 und dem übrigen Gehäuse 54 eine Nut 71 gebildet (siehe Figur 5), in welche der Verankerungsabschnitt 64 eingeführt werden kann. Diese Nut 71 ist ebenso wie der Vorsprung 70 starr. Somit kann der Verankerungsabschnitt 64 in die Nut 71 des Verankerungsgegenabschnitts 68 eingeführt und durch den Verankerungsgegenabschnitt 68 formschlüssig gegen ein Entfernen, also im Wesentlichen gegen ein Abheben von der Funktionsfläche 56, gesichert sein.

Am Gehäuse 54 ist überdies ein mit dem Verrastungsabschnitt 66 der Schutzplatte 58 zusammenwirkender Verrastungsgegenabschnitt 72 vorgesehen, welcher ein bewegliches Rastbauteil 74 mit einer Rastformation 74a aufweist.

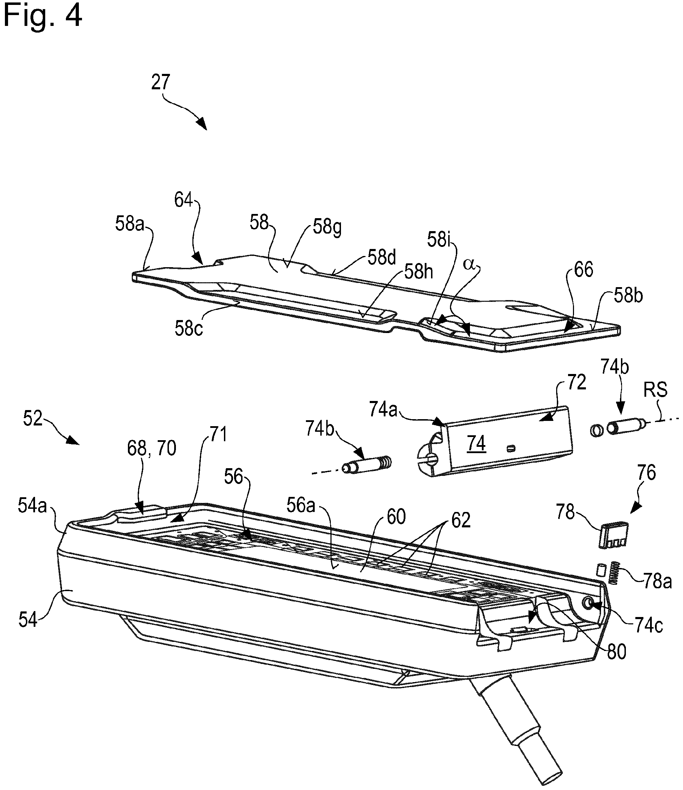

Die Rastformation 74a ist einstückig mit dem Rastbauteil 74 ausgebildet und um eine Rastschwenkachse RS bezüglich des übrigen Gehäuses 54 schwenkbar. Die Rastschwenkachse RS ist parallel zu dem den Verrastungsabschnitt 66 bildenden Rand 58b der Schutzplatte 58 orientiert, wenn sich der Verrastungsabschnitt 66 in Verrastungseingriff mit dem Verrastungsgegenabschnitt 72 befindet (siehe Figuren 4 und 5). Sie ist definiert durch in Ausschubrichtung federvorgespannte, vorzugsweise teleskopierbare, Achsbaugruppen 74b, welche im Rastbauteil 74 aufgenommen sein und in entsprechende Lagerausnehmungen 74c am übrigen Gehäuse 54 einragen können.

In Figur 5 ist dargestellt, wie die Rastformation 74a den durch den Rand 58b gebildeten Verrastungsabschnitt 66 in einer zwischen der Rastformation 74a und einem ihr in der in Figur 5 gezeigten Verrastungsstellung gegenüberliegenden Gehäusevorsprung 54b gebildeten Nut 73 formschlüssig in Eingriff hält. Der Formschlusseingriff des Verrastungsabschnitts 66 durch die Rastformation 74a im Zusammenwirken mit dem Gehäusevorsprung 54b entspricht im Wesentlichen dem Formschlusseingriff des Verankerungsabschnitts 64 in der Nut 71 durch den Vorsprung 70 des Verankerungsgegenabschnitts 68. Somit ist die Schutzplatte 58 in ihrer Abdeckposition, wie sie etwa in den Figuren 2 und 5 gezeigt ist, durch Formschlusseingriff an ihren entgegengesetzten Längsenden mit dem Verankerungsgegenabschnitt 68 und dem Verrastungsgegenabschnitt 72 gegen ein Entfernen von der Funktionsfläche 56 gesichert. Wie vor allem Figur 2 zeigt, überdeckt die Rastformation 74a in ihrer Verrastungsstellung bevorzugt den Rand 58b der Schutzplatte über seine gesamte Länge zwischen den Längsrändern 58c und 58d.

Das Gehäuse 54 umgibt bevorzugt die Schutzplatte 58 in ihrer Abdeckposition an allen Rändern und steht auch über die Schutzplatte 58 hinaus in Richtung von der Ausgabeseite 56a weg vor. An den den Verankerungsabschnitt 64 und den Verrastungsabschnitt 66 bildenden Rändern 58a bzw. 58b umgreift das Gehäuse 54 (die Rastformation 74a ist als Teil des Rastbauteils 74 beweglicher Teil des Gehäuses 54) die Schutzplatte 58. Den den Verankerungsabschnitt 64 mit dem Verrastungsabschnitt 66 verbindenden Längsrändern 58c und 58d (siehe Figur 4) der Schutzplatte 58 liegt der über die Ausgabeseite 56a der Funktionsfläche 56 bei bestimmungsgemäßem Gebrauch zum Maschinenführer hin vorstehende Gehäuseteil 54a mit engem Spalt gegenüber. Vorzugsweise beträgt die Summe der Spaltweiten zwischen beiden Rändern 58c und 58d und dem ihnen gegenüberliegenden Gehäuseabschnitt 54a weniger als 1 mm. Dieses Spaltmaß reicht für eine schnelle und bequeme Anordnung der Schutzplatte in der Abdeckposition, erschwert jedoch ein Einhebeln eines Werkzeugs in den Spalt. Bevorzugt sind die Spaltweiten in der Summe kleiner als 0,8 mm.

In Figur 5 ist die Rastformation 74a in ihrer Verrastungsstellung gezeigt. Sie kann in dem in Figur 5 gezeigten Zustand der Informationsschnittstellenvorrichtung 27 - bei Betrachtung der Figur 5 - entgegen dem Uhrzeigersinn um die Rastschwenkachse RS in eine Lösestellung verstellt werden, in welcher der Formschlusseingriff zwischen Rastformation 74a und Verrastungsabschnitt 66 aufgehoben ist, sodass dann der Verrastungsabschnitt 66 vom Gehäusevorsprung 54b an der Rastformation 74a in der Lösestellung vorbei abgehoben und in der so erreichten Schrägstellung der Schutzplatte 58 der Verankerungsabschnitt 64 aus dem Formschlusseingriff mit der Nut 71 des Verankerungsgegenabschnitts 68 herausgezogen werden kann.

Die Verstellung der Rastformation 74a von der in Figur 5 gezeigten Verrastungsstellung in eine davon im Gegenuhrzeigersinn weggeschwenkte Lösestellung kann jedoch nur dann erfolgen, wenn eine Sperrvorrichtung 76 die entsprechende Verstellbewegung der Rastformation 74a bzw. des Rastbauteils 74 freigibt.

Im dargestellten bevorzugten Ausführungsbeispiel umfasst die Sperrvorrichtung 76 einen Sperrkörper 78, welcher in einer Aufnahmeausnehmung 80 in dem das Rastbauteil 74 beweglich aufnehmenden Teil des Gehäuses 54 aufgenommen ist. Die Aufnahmeausnehmung 80 definiert eine vorzugsweise geradlinige translatorische Bewegungsbahn BB, längs welcher der Sperrkörper 78 in der Aufnahmeausnehmung 80 bewegbar aufgenommen ist. Die Aufnahmeausnehmung 80 weist längs der Bewegungsbahn BB eine größere Abmessung auf als der Sperrkörper 78, sodass der Sperrkörper 78 translatorisch in der Aufnahmeausnehmung 80 bewegt werden kann, ohne die Aufnahmeausnehmung 80 zu verlassen.

Das Rastbauteil 74 weist eine Sperrausnehmung 82 auf, in welche der Sperrkörper 78 von seiner Aufnahmeausnehmung aus längs der Bewegungsbahn BB dann eintreten kann, wenn die Sperrausnehmung 82 und die Aufnahmeausnehmung 80 miteinander fluchten. Dies ist dann der Fall, wenn sich die Rastformation 74a in der Verrastungsstellung befindet.

Die Sperrausnehmung 82 weist längs der Bewegungsbahn BB eine kürzere Abmessung auf als der Sperrkörper 78, sodass der Sperrkörper 78 zwar aus seiner Aufnahmeausnehmung 80 heraus durch eine Sperrkörper-Öffnung 82a der Sperrausnehmung 82 in die Sperrausnehmung 82 eintreten kann, jedoch selbst bei maximalem Eintritt in die Sperrausnehmung 82 die Aufnahmeausnehmung 80 nicht vollständig verlassen kann.

Der Sperrkörper 78 ist durch eine Feder 78a in seine Sperrstellung, in welcher er sich sowohl in der Sperrausnehmung 82 als auch in seiner Aufnahmeausnehmung 80 befindet, vorgespannt. Die Feder 78a ist nur in Figur 4, nicht jedoch in Figur 5 zu erkennen.

Der Sperrkörper 78 wird somit durch die Feder 78a dann in die Sperrstellung verlagert, wenn das Rastbauteil 74 mit der Rastformation 74a in die Verrastungsstellung bewegt wird. Der sich dann sowohl in der Sperrausnehmung 82 als auch in der Aufnahmeausnehmung 80 befindende Sperrkörper 78 verhindert körperlich in dieser Sperrstellung eine Relativbewegung des Rastbauteils 74 relativ zum übrigen Gehäuse 54.

Zur Entriegelung der Rastformation 74a weist das Rastbauteil 74 einen Entriegelungskanal 84 auf. Dieser mündet an einer Entriegelungsöffnung 84a in die Sperrausnehmung 82 und reicht bis zu einer Einführöffnung 84b an der Außenseite des Rastbauteils 74.

Durch einen Entriegelungskörper 86, vorzugsweise verkörpert durch den Betriebsschlüssel der Bodenbearbeitungsmaschine 10, kann ein Sperrkörper 78 aus der Sperrstellung zurück in seine in Figur 5 gezeigte Freigabestellung verdrängt werden. Hierzu wird etwa der das Schließgeheimnis des Schlüssels 86 verkörpernde Bart 86a durch die Einführöffnung 84b in den Entriegelungskanal 84 eingeführt, bis der nicht mehr durch die Einführöffnung 84b passende Griffabschnitt 86b des Schlüssels 86 an der Außenfläche des Rastbauteils 74 anliegt. In dieser vollständig in den Entriegelungskanal 84 eingeführten Stellung des Entriegelungskörpers 86 ist der Sperrkörper 78 genau in die in Figur 5 gezeigte Position gegen die Vorspannkraft der Feder 78a zurückgedrängt, sodass das Rastbauteil 74 und mit diesem die Rastformation 74a um die Rastschwenkachse RS verschwenkt werden können.

Der Entriegelungskanal 84, die Sperrausnehmung 82 und ein etwaig zwischen dem Rastbauteil 84 und dem übrigen Gehäuse 54 bestehender Spalt 88 sind abmessungsmäßig auf den Betriebsschlüssel 86 der Bodenbearbeitungsmaschine 10 derart abgestimmt, dass in der beschriebenen Art und Weise die Verdrängung des Sperrkörpers 78 in die Freigabestellung erfolgen kann.

Wird ein kürzerer als der erforderliche Entriegelungskörper in den Entriegelungskanal 84 eingeführt, wird der Sperrkörper 78 nicht vollständig aus der Sperrausnehmung heraus bewegt und behält seine Sperrwirkung bei.

Wird ein längerer Entriegelungskörper als der korrekte Entriegelungskörper 86 in den Entriegelungskanal 84 eingeführt, verdrängt er den Sperrkörper tief in die Aufnahmeausnehmung 80 hinein und ragt selbst in die Aufnahmeausnehmung hinein, sodass dann der zu lange Entriegelungskörper die ursprünglich vom Sperrkörper 78 ausgeübte Sperrwirkung übernimmt.

Das Gehäuse 54 ist mit Ausnahme des Rastbauteils 74 vorzugsweise einstückig ausgebildet, beispielsweise als mechanisch robustes Kunststoffbauteil, besonders bevorzugt als durch Fasern oder/und Partikel verstärktes Kunststoffbauteil. Als Kunststoff ist geschäumtes Polyurethan bevorzugt.

Die Schutzplatte 58 kann ebenfalls ein Kunststoffbauteil sein oder wenigstens einen solchen Kunststoff umfassen Wiederum ist geschäumtes Polyurethan als Kunststoff bevorzugt. Zusätzlich kann die Schutzplatte 58 einen Metallkern aus Metallblech aufweisen.

Das Gehäuse 54 mit Ausnahme des Rastbauteils 74 ist vorzugsweise als einstückige Wanne ausgebildet, um möglichst wenig Fügestellen aufzuweisen, die Schwachstellen bei einem Vandalismusangriff sein können. Ebenso ist die Schutzplatte 58 vorzugsweise einstückig oder höchstens zweistückig, falls der oben erwähnte Metallkern Anwendung finden sollte.

Bevorzugt ist die in der Abdeckposition der Schutzplatte 58 von der Funktionsfläche 76 wegweisende Sichtseite 58e der Schutzplatte 58 profiliert ausgeführt, um die Biegesteifigkeit der Schutzplatte um zur Haupterstreckungsfläche der Schutzplatte 58 parallele Biegeachsen zu erhöhen. Hierzu kann die Schutzplatte wenigstens einen Vorsprung 58g aufweisen, welcher gegenüber einem Basisbereich 58h vorsteht. Um einen Werkzeugangriff an dem wenigstens einen Vorsprung 58g zu erschweren, ist dieser über eine Fase 58i mit dem Basisbereich 58h verbunden. Der Fasenwinkel α beträgt wenigstens 130°.

Der Sichtseite 58e der Schutzplatte 58 entgegengesetzt ist ihre Funktionsflächenseite 58f, welche in der in den Figuren 2 und 5 gezeigten Abdeckposition der Schutzplatte 58 der Ausgabeseite 56a der Funktionsfläche 56 mit geringem, möglichst konstantem Abstand gegenüberliegt.

Wie in Figur 2 strichliniert mit Bezugszeichen 58k angedeutet ist, kann die Schutzplatte 58 eine sie von der Sichtseite 58e bis zur Funktionsflächenseite 58f durchsetzende Betätigungsöffnung 58k aufweisen, um wenigstens ein, vorzugsweise genau ein, hochgradig sicherheitsrelevantes Bedienelement der Funktionsfläche 56 auch dann erreichen zu können, wenn sie von der Schutzplatte 58 abgedeckt ist. So kann beispielsweise ein Not-Aus-Schalter der Informationsschnittstellenvorrichtung 27 auch bei abgedeckter Funktionsfläche jederzeit erreichbar sein. Die Betätigungsöffnung 58k weist dabei Abmessungen auf, die gerade das Durchstecken eines Fingers zur Betätigung des Bedienelements erlauben. Alternativ kann das der Betätigungsöffnung 58k zugeordnete Bedienelement bündig mit der Sichtseite 58e sein oder über die Sichtseite 58e hinaus vorstehen. Auf die weitere Ausgestaltung der Schutzplatte 58 kommt es für das Vorsehen der Betätigungsöffnung 58k nicht an.

## Patentansprüche

1. Informationsschnittstellenvorrichtung (27, 27a), insbesondere für einen Fahrstand (24) oder/und ein Außenbedienpult (24a) einer Bodenbearbeitungsmaschine (10), wie etwa Straßenfräse, Recycler, Stabilisierer oder Surface-Miner, mit einer Schnittstellenbaugruppe (52), umfassend ein Gehäuse (54) und eine in dem Gehäuse (54) aufgenommene, zur Eingabe oder/und Ausgabe von Information ausgebildete Funktionsfläche (56), wobei die Informationsschnittstellenvorrichtung (27, 27a) eine gesondert von der Schnittstellenbaugruppe (52) ausgebildete Schutzplatte (58) zur Abdeckung der Funktionsfläche (56) aufweist, wobei die Schutzplatte (58) einen Verankerungsabschnitt (64) aufweist, mit welchem die Schutzplatte (58) an einem Verankerungsgegenabschnitt (68) der Schnittstellenbaugruppe (52) verankerbar und damit der Verankerungsabschnitt (64) gegen ein Entfernen von der Funktionsfläche (56) sicherbar ist, und wobei die Schutzplatte (58) einen vom Verankerungsabschnitt (64) verschiedenen Verrastungsabschnitt (66) aufweist, mit welchem die Schutzplatte (58) an einem Verrastungsgegenabschnitt (72) der Schnittstellenbaugruppe (52) lösbar verrastbar und damit der Verrastungsabschnitt (66) gegen ein Entfernen von der Funktionsfläche (56) sicherbar ist, wobei der Verrastungsgegenabschnitt (72) eine zwischen einer Verrastungsstellung und einer Lösestellung verstellbare Rastformation (74a) aufweist, wobei die Rastformation (74a) in der Verrastungsstellung dazu angeordnet ist - bei am Verankerungsgegenabschnitt (68) verankertem Verankerungsabschnitt (64) - einen ein Entfernen des Verrastungsabschnitts (66) von der Funktionsfläche (56) verhindernden Formschlusseingriff mit dem Verrastungsabschnitt (66) herzustellen, während dann, wenn sich - wiederum bei am Verankerungsgegenabschnitt (68) verankertem Verankerungsabschnitt (64) - die Rastformation (74a) in der Lösestellung befindet, der Verrastungsabschnitt (66) von der Funktionsfläche (56) entfernbar ist.

2. Informationsschnittstellenvorrichtung (27, 27a) nach Anspruch 1,
**dadurch gekennzeichnet, dass** der Verankerungsabschnitt (64) und der Verrastungsabschnitt (66) an einander endgegengesetzten Enden, insbesondere Längsenden, der Schutzplatte (58) vorgesehen sind.

3. Informationsschnittstellenvorrichtung (27, 27a) nach Anspruch 1 oder 2, **dadurch gekennzeichnet, dass** die Funktionsfläche (56) eine im bestimmungsgemäßen Betrieb vom Gehäuse (54) weg weisende Ausgabeseite (56a) und eine dieser entgegengesetzte, zum Gehäuse (54) hin weisende Technikseite (56b) aufweist, wobei das Gehäuse (54) über die Ausgabeseite (56a) vorsteht.

4. Informationsschnittstellenvorrichtung (27, 27a) nach einem der vorhergehenden Ansprüchen,
**dadurch gekennzeichnet, dass** ein Abschnitt aus Verankerungsabschnitt (64) und Verankerungsgegenabschnitt (68) einen Vorsprung (70) oder/und eine Nut (71) aufweist.

5. Informationsschnittstellenvorrichtung (27, 27a) nach Anspruch 4,
**dadurch gekennzeichnet, dass** der Verankerungsgegenabschnitt (68) einen Vorsprung (70) und eine Nut (71) aufweist, wobei bevorzugt der Vorsprung (70) am Gehäuse (54) ausgebildet ist und sich parallel zur Funktionsfläche (56) erstreckt, wobei besonders bevorzugt der Vorsprung (70) gemeinsam mit einem Abschnitt des übrigen Gehäuses (54) die Nut (71) bildet, in welche der Verankerungsabschnitt (64) der Schutzplatte (58) zur Verankerung derselben an der Schnittstellenbaugruppe (52) einführbar ist.

6. Informationsschnittstellenvorrichtung (27, 27a) nach einem der vorhergehenden Ansprüche,
**dadurch gekennzeichnet, dass** die Rastformation (74a) zur Hemmung einer Verstellbewegung durch eine an der Schnittstellenbaugruppe (52) oder/und an der Schutzplatte (58) vorgesehene Sperrvorrichtung (76) sperrbar ist.

7. Informationsschnittstellenvorrichtung (27, 27a) nach Anspruch 6,
**dadurch gekennzeichnet, dass** eine die Rastformation (74a) relativ zu sich verstellbar tragende Tragstruktur aus Schnittstellenbaugruppe (52) und Schutzplatte (58) als Teil der Sperrvorrichtung (76) einen Sperrkörper (78) aufweist, welcher in der Tragstruktur verlagerbar aufgenommen ist zwischen einer Sperrstellung, in der er eine Verstellbewegung der Rastformation (74a) hemmt, und einer Freigabestellung, in der er eine Verstellbewegung der Rastformation (74a) zulässt, wobei die Rastformation (74a) als weiteren Teil der Sperrvorrichtung (76) eine gemeinsam mit ihr bewegliche Sperrausnehmung (82) aufweist, in welche der Sperrkörper (78) in der Sperrstellung, die Verstellbewegung hemmend, einragt.

8. Informationsschnittstellenvorrichtung (27, 27a) nach Anspruch 7,
**dadurch gekennzeichnet, dass** die Sperrausnehmung (82) eine Sperrkörper-Öffnung (82a) aufweist, durch welche hindurch der Sperrkörper (78) in die Sperrausnehmung (82) hinein eintritt und aus ihr austritt, und eine von der Sperrkörper-Öffnung (82a) verschiedene Entriegelungsöffnung (84a) aufweist, durch welche hindurch ein Entriegelungskörper (86) zur Verdrängung des Sperrkörpers (78) aus der Sperrausnehmung (82) einführbar ist.

9. Informationsschnittstellenvorrichtung (27, 27a) nach Anspruch 8,
**dadurch gekennzeichnet, dass** die Rastformation (74a) oder/und ein gemeinsam mit der Rastformation (74a) verstellbares Bauteil (74) einen Entriegelungskanal (84) aufweist, welcher einenends an der Entriegelungsöffnung (84a) in die Sperrausnehmung (82) mündet und welcher anderenends von der Außenumgebung der Informationsschnittstellenvorrichtung (27, 27a) zugänglich ist.

10. Informationsschnittstellenvorrichtung (27, 27a) nach Anspruch 9,
**dadurch gekennzeichnet, dass** der Sperrkörper (78) in der Tragstruktur nur längs einer vorbestimmten linienförmigen, insbesondere geradlinigen Bahnkurve (BB) verlagerbar in einer Aufnahmeausnehmung (80) aufgenommen ist, wobei bevorzugt dann, wenn sich der Sperrkörper (78) in der Sperrstellung befindet, der Entriegelungskanal (84) und die Aufnahmeausnehmung (80) miteinander fluchten.

11. Informationsschnittstellenvorrichtung (27, 27a) nach Anspruch 10,
**dadurch gekennzeichnet, dass** dann, wenn sich der Sperrkörper (78) in der Sperrstellung befindet, die Sperrkörper-Öffnung (82a) von einer ihr nächstgelegenen Austrittsöffnung der Aufnahmeausnehmung (80) mit einem Abstand von nicht mehr als 1 mm, vorzugsweise von nicht mehr als 0,5 mm, besonders bevorzugt von nicht mehr als 0,2 mm entfernt gelegen ist.

12. Fahrstand (24) einer Bodenbearbeitungsmaschine (10) mit einer Informationsschnittstellenvorrichtung (27) nach einem der vorhergehenden Ansprüche.

13. Bodenbearbeitungsmaschine (10), wie etwa Straßenfräse, Recycler, Stabilisierer oder Surface-Miner, mit einer Informationsschnittstellenvorrichtung (27a) nach einem der Ansprüche 1 bis 11, insbesondere mit einem Fahrstand (24) nach Anspruch 12 oder/und mit einem Außenbedienpult (24a).

## Claims

1. An information interface apparatus (27, 27a), in particular for an operator's platform (24) or/and an external control panel of an earth working machine (10), for example a road milling machine, recycler, stabilizer, or surface miner, having an interface subassembly (52) encompassing a housing (54) and a functional surface (56) that is received in the housing (54) and embodied to input and/or output information, wherein the information interface apparatus (27, 27a) comprises a protective plate (58), embodied separately from the interface subassembly (52), to cover the functional surface (56); the protective plate (58) comprising an anchoring portion (64) with which the protective plate (58) is anchorable on a counterpart anchoring portion (68) of the interface subassembly (52) and the anchoring portion (64) is thus securable against removal from the functional surface (56); and the protective plate (58) comprising a latching portion (66), different from the anchoring portion (64), with which the protective plate (58) is releasably latchable on a counterpart latching portion (72) of the interface subassembly (52) and the latching portion (66) is thus securable against removal from the functional surface (56), wherein the counterpart latching portion (72) has a latch configuration (74a) which is displaceable between a latching position and a release position, wherein in the latching position, the latch configuration (74a) is arranged, when the anchoring portion (64) is anchored on the counterpart anchoring portion (68), to establish with the latching portion (66) a positive engagement that prevents removal of the latching portion (66) from the functional surface (56), whereas when the latch configuration (74a) is in the release position, when in turn the anchoring portion (64) is anchored on the counterpart anchoring portion (68), the latching portion (66) is removable from the functional surface (56).

2. The information interface apparatus (27, 27a) according to Claim 1, **characterized in that** the anchoring portion (64) and the latching portion (66) are provided at mutually opposite ends, in particular longitudinal ends, of the protective plate (58).

3. The information interface apparatus (27, 27a) according to Claim 1 or 2, **characterized in that** the functional surface (56) has an output side (56a) facing away from the housing (54) during operation as intended, and a technology side (56b) located oppositely therefrom and facing toward the housing (54), the housing (54) protruding beyond the output side (56a).

4. The information interface apparatus (27, 27a) according to one of the preceding claims,
**characterized in that** one portion from among the anchoring portion (64) and counterpart anchoring portion (68) comprises a protrusion (70) and/or a groove (71).

5. The information interface apparatus (27, 27a) according to Claim 4, **characterized in that** the counterpart anchoring portion (68) comprises a protrusion (70) and a groove (71), preferably the protrusion (70) being embodied on the housing (54) and extending parallel to the functional surface (56), particularly preferably the protrusion (70), together with a portion of the remainder of the housing (54), constituting the groove (71) into which the anchoring portion (64) of the protective plate (58) is introducible for anchoring thereof on the interface subassembly (52).

6. The information interface apparatus (27, 27a) according to one of the preceding claims,
**characterized in that** in order to inhibit a displacement movement, the latch configuration (74a) is lockable by means of a locking apparatus (76) provided on the interface subassembly (52) and/or on the protective plate (58).

7. The information interface apparatus (27, 27a) according to Claim 6, **characterized in that** one support structure from among the interface subassembly (52) and protective plate (58), which carries the latch configuration (74a) displaceably relative to it and constitutes part of the locking apparatus (76), comprises a locking body (78) that is received in the support structure displaceably between a locking position in which it inhibits a displacement movement of the latch configuration (74a) and an enabling position in which it permits a displacement movement of the latch configuration (74a); the latch configuration (74a), constituting a further part of the locking apparatus (76), comprising a locking recess (82) which is movable together with it and into which the locking body (78) projects in the locking position so as to inhibit the displacement movement.

8. The information interface apparatus (27, 27a) according to Claim 7, **characterized in that** the locking recess (82) comprises a locking body opening (82a) through which the locking body (78) enters into and emerges from the locking recess (82), and an unlocking opening (84a), different from the locking body opening (82a), through which an unlocking body (86) is introducible in order to push the locking body (78) out of the locking recess (82).

9. The information interface apparatus (27, 27a) according to Claim 8, **characterized in that** the latch configuration (74a) and/or a component (74) displaceable together with the latch configuration (74a) comprises an unlocking channel (84) that at one end opens at the unlocking opening (84a) into the locking recess (82), and at the other end is accessible from the external environment of the information interface apparatus (27, 27a).

10. The information interface apparatus (27, 27a) according to Claim 9, **characterized in that** the locking body (78) is received in the support structure in a receiving recess (80) displaceably only along a predetermined linear, in particular straight-line, trajectory (BB), the unlocking channel (84) and the receiving recess (80) preferably aligning with one another when the locking body (78) is in the locking position.

11. The information interface apparatus (27, 27a) according to Claim 10, **characterized in that** when the locking body (78) is in the locking position, the locking body opening (82a) is located at a distance of no more than 1 mm, preferably no more than 0.5 mm, particularly preferably no more than 0.2 mm away from an outlet opening, located closest to it, of the receiving recess (80).

12. An operator's platform (24) of an earth working machine (10) having an information interface apparatus (27) according to one of the preceding claims.

13. An earth working machine (10), for example a road milling machine, recycler, stabilizer, or surface miner, having an information interface apparatus (27a) according to one of Claims 1 to 11, in particular having an operator's platform (24) according to Claim 12 and/or an external control panel (24a).

## Revendications

1. Dispositif d'interface d'informations (27, 27a), en particulier pour un poste de conduite (24) et/ou un panneau de commande externe (24a) d'une machine de traitement du sol (10), telle qu'une fraiseuse routière, un recycleur, un stabilisateur ou un mineur de surface, avec un ensemble d'interface (52), comprenant un boîtier (54) et une surface fonctionnelle (56) logée dans le boîtier (54) et conçue pour l'entrée et/ou la sortie d'informations, dans lequel le dispositif d'interface d'informations (27, 27a) comprend une plaque de protection (58) formée séparément de l'ensemble d'interface (52) pour couvrir la surface fonctionnelle (56), dans lequel la plaque de protection (58) comprend une partie d'ancrage (64) avec laquelle la plaque de protection (58) peut être ancrée à une contre-portion d'ancrage (68) de l'ensemble d'interface (52) et ainsi la partie d'ancrage (64) peut être sécurisée contre un retrait de la surface fonctionnelle (56), et dans laquelle la plaque de protection (58) comprend une partie de verrouillage (66) qui est différente de la partie d'ancrage (64), avec laquelle la plaque de protection (58) peut être verrouillée de manière amovible sur une contre-portion de verrouillage (72) de l'ensemble d'interface (52) et ainsi la partie de verrouillage (66) peut être sécurisée contre un retrait de la surface fonctionnelle (56),
dans lequel la contre-portion de verrouillage (72) comprend une formation de verrouillage (74a) qui peut être ajustée entre une position de verrouillage et une position de libération, la formation de verrouillage (74a) étant disposée dans la position de verrouillage - avec la partie d'ancrage (64) ancrée à la contre-portion d'ancrage (68) - pour établir un engagement de forme avec la partie de verrouillage (66) empêchant le retrait de la partie de verrouillage (66) de la surface fonctionnelle (56), tandis que, lorsque la formation de verrouillage (74a) est dans la position désengagée, toujours avec la partie d'ancrage (64) ancrée à la contre-portion d'ancrage (68), la partie de verrouillage (66) peut être retirée de la surface fonctionnelle (56).

2. Dispositif d'interface d'informations (27, 27a) selon la revendication 1, **caractérisé en ce que** la partie d'ancrage (64) et la partie de verrouillage (66) sont prévues à des extrémités opposées, en particulier des extrémités longitudinales, de la plaque de protection (58).

3. Dispositif d'interface d'informations (27, 27a) selon la revendication 1 ou 2, **caractérisé en ce que** la surface fonctionnelle (56) a un côté de sortie (56a) tourné à l'opposé du boîtier (54) dans le fonctionnement prévu et un côté technique (56b) opposé à celui-ci et tourné vers le boîtier (54), le boîtier (54) faisant saillie au-delà du côté de sortie (56a).

4. Dispositif d'interface d'informations (27, 27a) selon l'une des revendications précédentes,
**caractérisé en ce qu'une** partie parmi la partie d'ancrage (64) et la contre-portion d'ancrage (68) comprend une saillie (70) ou/et une rainure (71).

5. Dispositif d'interface d'informations (27, 27a) selon la revendication 4, **caractérisé en ce que** la contre-portion d'ancrage (68) comprend une saillie (70) et une rainure (71), de préférence la saillie (70) étant formée sur le boîtier (54) et s'étendant parallèlement à la surface fonctionnelle (56), dans lequel, de manière particulièrement préférée, la saillie (70) forme, avec une partie du reste du boîtier (54), la rainure (71) dans laquelle la partie d'ancrage (64) de la plaque de protection (58) peut être insérée pour ancrer cette dernière à l'ensemble d'interface (52).

6. Dispositif d'interface d'informations (27, 27a) selon l'une des revendications précédentes,
**caractérisé en ce que** la formation de verrouillage (74a) pour inhiber un mouvement de réglage est verrouillable par un dispositif d'arrêt (76) prévu sur l'ensemble d'interface (52) ou/et sur la plaque de protection (58).

7. Dispositif d'interface d'informations (27, 27a) selon la revendication 6, **caractérisé en ce qu'une** structure de support de l'ensemble d'interface (52) et de la plaque de protection (58), qui supporte la formation de verrouillage (74a) de manière à pouvoir la déplacér par rapport à elle-même, comprend comme partie du dispositif d'arrêt (76) un corps d'arrêt (78) qui est reçu de manière déplaçable dans la structure de support entre une position d'arrêt dans laquelle il empêche un mouvement de déplacement de la formation de verrouillage (74a), et une position de libération dans laquelle il permet un mouvement de déplacement de la formation de verrouillage (74a), la formation de verrouillage (74a) ayant, en tant qu'autre partie du dispositif d'arrêt (76), un évidement d'arrêt (82) qui peut se déplacer avec elle et dans lequel le corps d'arrêt (78) fait saillie dans la position de verrouillage, empêchant le mouvement de déplacement.

8. Dispositif d'interface d'informations (27, 27a) selon la revendication 7, **caractérisé en ce que** l'évidement d'arrêt (82) présente une ouverture de corps d'arrêt (82a) à travers laquelle le corps d'arrêt (78) entre et sort de l'évidement d'arrêt (82), et présente une ouverture de déverrouillage (84a) qui est différente de l'ouverture de corps d'arrêt (82a) et à travers laquelle un corps de déverrouillage (86) peut être inséré pour déplacer le corps d'arrêt (78) de l'évidement d'arrêt (82).

9. Dispositif d'interface d'informations (27, 27a) selon la revendication 8, **caractérisé en ce que** la formation de verrouillage (74a) et/ou un composant (74) pouvant être déplacé conjointement avec la formation de verrouillage (74a) présente un canal de déverrouillage (84) qui, à une extrémité, débouche dans l'évidement d'arrêt (82) au niveau de l'ouverture de déverrouillage (84a) et qui, à l'autre extrémité, est accessible depuis l'environnement extérieur du dispositif d'interface d'informations (27, 27a).

10. Dispositif d'interface d'informations (27, 27a) selon la revendication 9, **caractérisé en ce que** le corps d'arrêt (78) n'est logé dans la structure de support de manière déplaçable dans un évidement de réception (80) que le long d'une courbe de trajectoire (BB) linéaire prédéterminée, en particulier rectiligne, de préférence lorsque le corps d'arrêt (78) est en position de verrouillage, le canal de déverrouillage (84) et l'évidement de réception (80) étant alignés.

11. Dispositif d'interface d'informations (27, 27a) selon la revendication 10, **caractérisé en ce que** lorsque le corps d'arrêt (78) est dans la position d'arrêt, l'ouverture du corps d'arrêt (82a) est située à une distance non supérieure à 1 mm, de préférence non supérieure à 0,5 mm, plus préférablement non supérieure à 0,2 mm, d'une ouverture de sortie de l'évidement de réception (80) situé le plus près de celui-ci.

12. Poste de conduite (24) d'une machine de traitement du sol (10) comprenant un dispositif d'interface d'informations (27) selon l'une des revendications précédentes.

13. Machine de traitement du sol (10), telle qu'une fraiseuse routière, un recycleur, un stabilisateur ou un mineur de surface, avec un dispositif d'interface d'informations (27a) selon l'une quelconque des revendications 1 à 11, en particulier avec un poste de conduite (24) selon la revendication 12 ou/et avec un panneau de commande externe (24a).
